# EUROPÄISCHE PATENTSCHRIFT

(11) **EP 3 274 234 B1**
(45) Veröffentlichungstag und Bekanntmachung des Hinweises auf die Patenterteilung: **21.04.2021**
(21) Anmeldenummer: 15794907.4
(22) Anmeldetag: 13.11.2015
(51) Int. Cl.: B60W 50/06, B60W 50/08, G06F 9/445, G06F 9/44

(54) **INFORMATIONS- UND UNTERHALTUNGSSYSTEM FÜR EIN FAHRZEUG**
INFORMATION AND ENTERTAINMENT SYSTEM FOR A VEHICLE
SYSTÈME D'INFORMATION ET DE DIVERTISSEMENT POUR VÉHICULE

(30) Priorität: 25.03.2015 DE 102015205378
(43) Veröffentlichungstag der Anmeldung: 31.01.2018
(73) Patentinhaber: Volkswagen Aktiengesellschaft, 38440 Wolfsburg (DE)
(72) Erfinder: HÖHNE, Sven, Verstorben (DE)
(86) Internationale Anmeldenummer: PCT/EP2015/076535
(87) Internationale Veröffentlichungsnummer: WO 2016/150528

(56) Entgegenhaltungen:
- EP-A2- 1 944 690
- US-A1- 2005 149 938
- US-A1- 2007 121 665
- US-A1- 2013 311 762

## Beschreibung

Die vorliegende Erfindung betrifft ein Verfahren für ein Informations- und Unterhaltungssystem eines Fahrzeugs, ein sogenanntes Infotainmentsystem. Die vorliegende Erfindung betrifft ferner ein Informations- und Unterhaltungssystem für ein Fahrzeug sowie ein Fahrzeug mit einem Informations- und Unterhaltungssystem.

In modernen Fahrzeugen kommen immer großflächigere Anzeigesysteme zum Einsatz, beispielsweise Flachbildschirme mit berührungssensitiven Oberflächen, sogenannte Touchscreens. Weiterhin werden zunehmend mehr Funktionen über diese Anzeige- und Bediensysteme gesteuert. Daher steigen auch die Anforderungen an Recheneinheiten, welche mit den Anzeige- und Bediensystemen gekoppelt sind und die Funktionen ausführen. Diese Recheneinheiten benötigen für den Start eine gewisse Zeitspanne, während derer das Anzeige- und Bediensystem nicht nutzbar ist. Bei komplexen Infotainmentsystemen kann diese Zeitspanne im Bereich von mehreren Minuten liegen, bis sämtliche Funktionen verfügbar sind.

Durch die größeren Anzeigesysteme wird ein erheblicher Bauraum, beispielsweise in der Mittelkonsole des Fahrzeugs, benötigt. Daher werden häufig Bedienelemente, welche früher als diskrete Bedienelemente ausgebildet wurden, in das Anzeige- und Bediensystem integriert. Dies kann beispielsweise Bedienelemente der Klimaanlage oder Sitzverstellung umfassen. Für einige Funktionen, wie beispielsweise die Sitzverstellung oder die Einstellung der Klimaanlage, ist es jedoch wünschenswert, dass diese Funktionen unmittelbar nach dem Betreten des Fahrzeugs, beispielsweise nach dem Einschalten der Zündung, verfügbar sind.

In diesem Zusammenhang offenbart die DE 10 2004 055 051 B3 einen schnellen Systemstart für ein eingebettete Systeme. Bei einem Verfahren zur Beschleunigung eines Startvorgangs einer Applikation mit großem Software-Anteil werden alle erforderlichen Ladevorgänge und Konfigurationsvorgänge der Applikation so vorgenommen, dass der Zustand von Datenspeicher und von Prozessorregistern einen lauffähigen Zustand der Applikation beschreibt. Das so vorgeladene System wird angehalten und der Inhalt des Datenspeichers und die Prozessorregister nicht flüchtig gespeichert. Für zukünftige Ladevorgänge werden lediglich ein Teil der nicht flüchtig gespeicherten Inhalte des Datenspeichers und der Prozessorregister im Rechnersystem rekonstruiert und weitere Teile der nicht flüchtig gespeicherten Inhalte des Datenspeichers werden geladen.

Die EP 1 944 690 A2 betrifft ein System mit mindestens zwei vorgegebenen Komponenten. Das System kann beispielsweise ein Multimediasystem für ein Fahrzeug umfassen. Mindestens eine Komponente ist als eine Erstkomponente vorgegeben, die nach dem Beginn einer Startphase des Systems als erstes genutzt werden soll. Mindestens eine Komponente ist als eine weitere Komponente vorgegeben. Mindestens ein Arbeitsprogramm, dass der mindestens einen Erstkomponente zugeordnet ist und das abgearbeitet sein muss, bevor die mindestens eine Erstkomponente nutzbar ist, wird mit einer ersten Lastpriorität abgearbeitet. Mindestens ein Arbeitsprogramm, dass der mindestens einen weiteren Komponente zugeordnet ist und das abgearbeitet sein muss, bevor die mindestens eine weitere Komponente nutzbar ist, wird mit einer zweiten Lastpriorität abgearbeitet, die niedriger ist als die erste Lastpriorität. Durch das abarbeiten der Arbeitsprogramme, die der mindestens einen Erstkomponente zugeordnet sind, mit der ersten Lastpriorität kann erreicht werden, dass die Erstkomponente besonders früh nach dem Beginn der Startphase des Systems nutzbar ist.

Die US 2013/0311762 A1 betrifft ein Verfahren zum Bereitstellen eines Benutzerzugriffs auf bestimmte Programme und Dokumente, bevor ein Boot-Vorgang abgeschlossen ist. Eine Schnellstartliste wird erzeugt, welche eine Liste von Programmen und Dokumenten enthält, welche mit Priorität beim Initialisieren während des Boot-Vorgangs bereitgestellt werden sollen. Die Programme und Dokumente, welche in der Schnellstartliste aufgeführt sind, werden so bald wie möglich gemäß der Anforderungen des Boot-Verfahrens initialisiert. Aufgrund einer Initialisierung dieser Programme und Dokumente können derartige Programme und Dokumente als Symbole auf einer Benutzeroberfläche angezeigt werden. Als ein Ergebnis hat der Benutzer einen schnelleren Zugriff auf derartige Programme und Dokumente ohne darauf warten zu müssen, dass der Boot-Vorgang abgeschlossen ist.

Die US 6,801,994 B2 betrifft Softwareverwaltungssysteme und Verfahren für Computervorrichtungen im Automobilbereich. Um einen Startvorgang der Computervorrichtung, ein sogenanntes Booten, so schnell wie möglich durchzuführen, wird eine Kopie eines Objektspeichers in einem nicht flüchtigen Speicher gehalten. Die Objektspeicherkopie wird aus einem vorhergehenden Startvorgang des Systems erhalten. Wenn die Computervorrichtung gestartet wird oder unter Strom gesetzt wird, werden während des Bootens nur vorbestimmte Objektspeicherseiten von dem nicht flüchtigen Speicher in einen Arbeitsspeicher geladen. Dies führt dazu, dass weniger als alle der Objektspeicherseiten während des Bootens geladen werden.

Die US 7,373,493 B2 betrifft Startverfahren, sogenannte Boot-Verfahren, für ein Computersystem. Das Computersystem startet von einer Partition, welche ein Betriebssystem in einem Schlafmodus, einem sogenannten Hibernation-Modus, umfasst.

Bei den zuvor beschriebenen Verfahren wird für den schnellen Systemstart ein nicht flüchtiger Speicher benötigt, welcher mit wachsender Anzahl von Funktionen des Systems eine erhebliche Größe aufweisen muss. Ferner kann mit wachsender Größe dieses nicht flüchtigen Speichers auch die Zeit ansteigen, welche benötigt wird, um das System aus dem nicht flüchtigen Speicher heraus zu starten.

Aufgabe der vorliegenden Erfindung ist es daher, ein verbessertes und schnelles Startverhalten eines Infotainmentsystems eines Fahrzeugs zu erreichen.

Diese Aufgabe wird gemäß der vorliegenden Erfindung durch ein Verfahren für ein Informations- und Unterhaltungssystem eines Fahrzeugs nach Anspruch 1, ein Informations- und Unterhaltungssystem nach Anspruch 8 und ein Fahrzeug nach Anspruch 10 gelöst. Die abhängigen Ansprüche definierten bevorzugte und vorteilhafte Ausführungsformen der Erfindung.

Gemäß der vorliegenden Erfindung wird ein Verfahren für ein Informations- und Unterhaltungssystem eines Fahrzeugs bereitgestellt. Das Informations- und Unterhaltungssystem wird auch als Infotainmentsystem bezeichnet. Das Informations- und Unterhaltungssystem stellt mehrere Funktionen bereit, welche von einem Benutzer des Fahrzeugs verwendbar sind. Beispielsweise kann das Infotainmentsystem eine Navigationsfunktion, eine Musik- oder Videowiedergabefunktion, eine Radiofunktion, eine Mobilfunkkommunikationsfunktion sowie Funktionen zum Bedienen von Fahrzeugkomponenten, wie z.B. Beispiel einer Klimaanlage oder einer Sitzverstellung des Fahrzeugs, bereitstellen. Bei dem Verfahren wird durch den Benutzer eine Rangfolge der mehreren Funktionen eingestellt. Die Rangfolge gibt eine von dem Benutzer gewünschte zeitliche Verfügbarkeit der Funktionen nach einem Einschalten des Informations- und Unterhaltungssystems an. In Abhängigkeit von der eingestellten Rangfolge werden die mehreren Funktionen nach einem Starten des Informations- und Unterhaltungssystems ausgeführt. Das Einstellen der Rangfolge der mehreren Funktionen kann beispielsweise mit Hilfe eines Konfigurationsmenüs des Informations- und Unterhaltungssystems über eine entsprechende Benutzerschnittstelle durch den Benutzer eingestellt werden. Da unterschiedliche Benutzer unterschiedliche Vorlieben für die Verwendung der Funktionen des Informations- und Unterhaltungssystems haben können, kann diesen Vorlieben des Benutzers durch Ausführen der Funktionen in Abhängigkeit von der eingestellten Rangfolge Rechnung getragen werden. Beispielsweise kann es für einen Benutzer wichtiger sein, dass möglichst schnell das Navigationssystem zur Verfügung steht, wohingegen ein anderer Benutzer mehr Wert darauf legt, dass möglichst schnell eine Internetverbindung aufgebaut werden kann oder eine Musikwiedergabe eingestellt werden kann.

Gemäß einer Ausführungsform wird in Abhängigkeit von der Rangfolge eine Startreihenfolge erzeugt, mit welcher die mehreren Funktionen des Informations- und Unterhaltungssystems gestartet werden. Die Startreihenfolge kann im Wesentlichen der von dem Benutzer eingestellten Rangfolge entsprechen, wobei jedoch Abhängigkeiten der unterschiedlichen Funktionen untereinander zu berücksichtigen sind. Daher kann die Startreihenfolge auch von der durch den Benutzer eingestellten Rangfolge abweichen. Ferner kann das Starten unterschiedlicher Funktionen unterschiedlich lange dauern, sodass auch aus diesem Grund die Startreihenfolge Unterschiede zu der von dem Benutzer eingestellten Rangfolge aufweisen kann. Indem unter Berücksichtigung dieser Randbedingungen die Startreihenfolge in Abhängigkeit von der Rangfolge erzeugt wird, kann das von dem Benutzer gewünschte Ergebnis sichergestellt werden.

Mindestens eine Funktion der mehreren Funktionen des Informations- und Unterhaltungssystems kann mehrere Teilfunktionen umfassen, welche getrennt voneinander gestartet werden können. Beispielsweise kann eine Navigationsfunktion eine erste Teilfunktion zum Eingeben eines Navigationsziels, eine zweite Teilfunktion zum Berechnen einer Route zu dem Navigationsziel und eine dritte Teilfunktion zum Ausgeben von Fahrtrichtungshinweisen gemäß der berechneten Route umfassen. Gemäß einer Ausführungsform werden nach dem Einschalten des Informations- und Unterhaltungssystems die mehreren Teilfunktionen einer der mehreren Funktionen in einer vorgegebenen Teilfunktionsstartreihenfolge gestartet. In dem zuvor genannten Beispiel des Navigationssystems kann beispielsweise die Funktion zur Eingabe des Navigationsziels sehr früh gestartet werden, sofern die Verfügbarkeit des Navigationssystems in der von dem Benutzer eingestellten Rangfolge eine hohe Priorität genießt. Da das Einstellen des Navigationsziels durch den Benutzer jedoch üblicherweise eine gewisse Zeit in Anspruch nimmt, kann das Starten der Teilfunktionen zum Berechnen der Route und zum Ausgeben von Fahrtrichtungshinweisen erheblich später durchgeführt werden, sodass inzwischen andere Funktionen oder Teilfunktionen anderer Funktionen gestartet werden können. Insbesondere das Starten der Teilfunktion zum Ausgeben der Fahrtrichtungshinweise des Navigationssystems kann noch weiter verzögert werden, beispielsweise bis der Motor des Fahrzeugs angelassen wird oder bis sich das Fahrzeug in Bewegung setzt. Dadurch können viele Funktionen zumindest teilweise gestartet werden, sodass dem Benutzer in verhältnismäßig kurzer Zeit viele Funktionen sofort oder sehr schnell zumindest soweit bereitgestellt werden können, dass diese aus Sicht des Benutzers hinreichend verwendbar sind.

Das Informations- und Unterhaltungssystem umfasst zumindest eine erste Verarbeitungsvorrichtung und eine zweite Verarbeitungsvorrichtung. Die erste Verarbeitungsvorrichtung ist beispielsweise eine Mikroprozessorsteuerung, welche einen verhältnismäßig kleinen Datenspeicher und eine verhältnismäßig geringe Datenverarbeitungsleistung aufweist. Die zweite Verarbeitungsvorrichtung kann beispielsweise ein Computersystem mit einer gegenüber der ersten Verarbeitungsvorrichtung erheblich größeren Datenverarbeitungsleistung und einem erheblich größerer Datenspeicher umfassen. Die erste Verarbeitungsvorrichtung kann daher nur verhältnismäßig einfache Funktionen ausführen, kann jedoch gegenüber der zweiten Verarbeitungsvorrichtung erheblich schneller gestartet werden, beispielsweise innerhalb weniger Sekunden, wohingegen die zweite Verarbeitungsvorrichtung, welche erheblich komplexer Funktionen und Anwendungen ausführen kann, erheblich mehr Zeit zum Starten eines entsprechenden Betriebssystems und der Funktionen benötigt, beispielsweise eine oder mehrere Minuten. Wie zuvor beschrieben, umfassen die mehreren Funktionen des Informations- und Unterhaltungssystems jeweils mehrere Teilfunktionen. Mindestens eine der Teilfunktionen wird auf der ersten Verarbeitungsvorrichtung ausgeführt und auf der zweiten Verarbeitungsvorrichtung werden alle Teilfunktionen einer entsprechenden Funktion ausgeführt. Anders ausgedrückt wird eine Funktion vollständig auf der zweiten Verarbeitungsvorrichtung ausgeführt und parallel dazu mindestens eine Teilfunktion dieser Funktion auf der ersten Verarbeitungsvorrichtung. Da die erste Verarbeitungsvorrichtung, wie zuvor beschrieben, zumindest Teilfunktionen im Allgemeinen schneller starten kann als die zweite Verarbeitungsvorrichtung, stehen zumindest Teilfunktionen über die erste Verarbeitungsvorrichtung sehr schnell zur Verfügung, wohingegen die gesamte Funktionalität einer Funktion etwas später auf der zweiten Verarbeitungsvorrichtung zur Verfügung steht. Wenn ein Benutzer beim Einstellen der Rangfolge beispielsweise die Navigationsfunktion mit hoher Wichtigkeit weit vorne in der Rangfolge angeordnet hat, kann beispielsweise die Teilfunktion zum Einstellen des Navigationsziels auf der ersten Verarbeitungsvorrichtung ausgeführt werden. Somit steht unmittelbar nach dem Starten des Informations- und Unterhaltungssystems diese Teilfunktion zur Verfügung. Die volle Funktionalität des Navigationssystems steht zwar erst später zur Verfügung, was jedoch aus Sicht des Benutzers im Allgemeinen unerheblich ist, da er ohnehin eine erhebliche Zeit zum Einstellen des Navigationsziels benötigt. In einem anderen Beispiel stellt der Benutzer in der Rangfolge beispielsweise für die Medienwiedergabe eine hohe Priorität ein. Eine Teilfunktion der Medienwiedergabe kann beispielsweise die Auswahl des Mediums, also beispielsweise Radio, gespeicherte Videos oder gespeicherte Musik umfassen. Diese Teilfunktionalität kann von der ersten Verarbeitungsvorrichtung nach kurzer Zeit nach dem Starten des Informations- und Unterhaltungssystems bereitgestellt werden. Wählt der Benutzer beispielsweise das Radio als Informationsquelle, kann die erste Verarbeitungsvorrichtung einen Radioempfänger aktivieren und die Radiowiedergabe kann unmittelbar gestartet werden. Wählt der Benutzer hingegen eine Wiedergabe gespeicherter Video- oder Musikdaten aus, kann von der ersten Verarbeitungsvorrichtung ein entsprechender Hinweis ausgegeben werden, dass entsprechende Daten noch geladen werden. Sobald die zweite Verarbeitungsvorrichtung die entsprechende Medienwiedergabefunktion gestartet hat, kann die gewünschte Medienwiedergabe beginnen.

Gemäß einer weiteren Ausführungsform umfasst das Informations- und Unterhaltungssystem eine Bedienvorrichtung, welche wahlweise mit der ersten Verarbeitungsvorrichtung oder der zweiten Verarbeitungsvorrichtung gekoppelt werden kann, um eine Bedienung von Funktionen zu ermöglichen, welche mit der entsprechenden Verarbeitungsvorrichtung ausgeführt werden. Nach dem Starten des Informations- und Unterhaltungssystems ist die Bedienvorrichtung zunächst mit der ersten Verarbeitungsvorrichtung gekoppelt. Dadurch wird eine Bedienung der Teilfunktionen ermöglicht, welche von der ersten Verarbeitungsvorrichtung ausgeführt werden, beispielsweise eine Zielorteingabe eines Navigationssystems. Erst wenn weitere zugehörige Teilfunktionen oder die gesamte Funktion auf der zweiten Verarbeitungsvorrichtung ausgeführt werden, wird die Bedienvorrichtung mit der zweiten Verarbeitungsvorrichtung gekoppelt. Dadurch ist eine Bedienung der weiteren Teilfunktionen oder aller Teilfunktionen der entsprechenden Funktion möglich. Das wahlweise Koppeln der Bedienvorrichtung mit der ersten Verarbeitungsvorrichtung oder der zweiten Verarbeitungsvorrichtung kann beispielsweise über eine entsprechende Umschaltvorrichtung erfolgen. Die Umschaltvorrichtung kann mit weiteren Verarbeitungsvorrichtungen gekoppelt werden, beispielsweise mit einer Verarbeitungsvorrichtung, welche ein Bild einer Rückfahrkamera bereitstellt, sodass auf der Bedienvorrichtung beispielsweise beim Rückwärtsfahren ein Bild der Rückfahrkamera dargestellt wird. Die Bedienvorrichtung kann beispielsweise einen berührungssensitiven Bildschirm umfassen, wodurch sowohl Ausgaben der Funktionen des Informations- und Unterhaltungssystems ausgegeben werden können als auch Benutzereingaben eingegeben werden können.

Bei einer weiteren Ausführungsform sind die erste Verarbeitungsvorrichtung und die zweite Verarbeitungsvorrichtung mit einem Steuerbussystem des Fahrzeugs gekoppelt, beispielsweise mit einer Ethernet des Fahrzeugs oder einem CAN-Bus-System. Über das Steuerbussystem können Vorrichtungen außerhalb des Informations- und Unterhaltungssystems mit Hilfe der mehreren Funktionen des Informations- und Unterhaltungssystems gesteuert werden. Die Vorrichtungen außerhalb des Informations- und Unterhaltungssystems können beispielsweise eine Klimaanlage des Fahrzeugs oder eine Sitzverstellung des Fahrzeugs umfassen. Indem sowohl die erste Verarbeitungsvorrichtung als auch die zweite Verarbeitungsvorrichtung mit dem Steuerbussystem des Fahrzeugs gekoppelt sind, können grundlegende Funktionen, wie z.B. die Sitzverstellung oder die Einstellung der Klimaanlage, über beide Verarbeitungsvorrichtungen eingestellt werden, beispielsweise von der ersten Verarbeitungsvorrichtung solange die zweite Verarbeitungsvorrichtung noch nicht vollständig gestartet ist und entsprechende Funktionen von der zweiten Verarbeitungsvorrichtung noch nicht zur Verfügung stehen.

Weiterhin kann die zweite Verarbeitungsvorrichtung zusätzlich eine Zugangsvorrichtung zu einem mobilen Funkkommunikationsnetz, beispielsweise einem funkbasierten Sprach- und/oder Datenkommunikationsnetz, aufweisen. Funktionen, welche auf der zweiten Verarbeitungsvorrichtung ausgeführt werden, können auf diese Zugangsvorrichtung zugreifen, um Sprachdaten eines Telefongesprächs zu übertragen oder Streamingdaten für eine Video- oder Musikwiedergabe zu empfangen.

Gemäß der vorliegenden Erfindung wird weiterhin ein Informations- und Unterhaltungssystem für ein Fahrzeug bereitgestellt. Das Informations- und Unterhaltungssystem umfasst eine Bedienvorrichtung zur Bedienung von mehreren Funktionen des Informations- und Unterhaltungssystems durch einen Benutzer des Informations- und Unterhaltungssystems und mindestens eine Verarbeitungsvorrichtung, welche mit der Bedienvorrichtung gekoppelt ist und in der Lage ist, die mehreren Funktionen auszuführen. Die Verarbeitungsvorrichtung ist ferner in der Lage, aufgrund einer Eingabe durch den Benutzer eine Rangfolge der mehreren Funktionen einzustellen. Die Rangfolge gibt eine von dem Benutzer gewünschte zeitliche Verfügbarkeit der Funktionen nach einem Einschalten des Informations- und Unterhaltungssystems an. In Abhängigkeit von der eingestellten Rangfolge führt die Verarbeitungsvorrichtung die mehreren Funktionen nach einem Starten des Informations- und Unterhaltungssystems aus. Dadurch können Belange und Wünsche eines Benutzers bezüglich der Verfügbarkeit der von dem Informations- und Unterhaltungssystem bereitgestellten Funktionen berücksichtigt werden.

Die mindestens eine Verarbeitungsvorrichtung umfasst eine erste Verarbeitungsvorrichtung und eine zweite Verarbeitungsvorrichtung. Ferner ist die Struktur von zumindest einigen Funktionen der mehreren Funktionen derart, dass sie mehrere Teilfunktionen umfasst, welche getrennt voneinander ausgeführt oder gestartet werden können. Die erste Verarbeitungsvorrichtung ist in der Lage, mindestens eine Teilfunktion der mehreren Teilfunktionen auszuführen, und die zweite Verarbeitungsvorrichtung ist in der Lage, sämtliche Teilfunktionen auszuführen. Die Bedienvorrichtung ist wahlweise mit der ersten Verarbeitungsvorrichtung oder zweiten Verarbeitungsvorrichtung koppelbar, um eine Bedienung der Funktionen oder Teilfunktionen zu ermöglichen, welche mit der entsprechenden Verarbeitungsvorrichtung ausgeführt werden. Nach einem Starten des Informations- und Unterhaltungssystems ist die Bedienvorrichtung zunächst mit der ersten Verarbeitungsvorrichtung gekoppelt. Dadurch wird eine Bedienung der Teilfunktionen ermöglicht, welche auf der ersten Verarbeitungsvorrichtung ausgeführt werden. Die zweite Verarbeitungsvorrichtung wird mit der Bedienvorrichtung gekoppelt, wenn auf der zweiten Verarbeitungsvorrichtung weitere Teilfunktionen ausgeführt werden, welche über die Teilfunktionen der ersten Verarbeitungsvorrichtung hinausgehen. Dadurch wird eine Bedienung der weiteren Teilfunktionen ermöglicht. Ferner kann die Umschaltung von der ersten Verarbeitungsvorrichtung auf die zweite Verarbeitungsvorrichtung derart erfolgen, dass ein Benutzer keinen entsprechenden Übergang bemerkt, sodass aus Sicht des Benutzers eine durchgängige Benutzung der Funktion möglich ist. Die erste Verarbeitungsvorrichtung und die zweite Verarbeitungsvorrichtung sind mit einem Steuerbussystem des Fahrzeugs gekoppelt, wodurch Vorrichtungen außerhalb des Informations- und Unterhaltungssystems mittels der mehreren Funktionen oder Teilfunktionen sowohl mittels der ersten Verarbeitungsvorrichtung als auch mittels der zweiten Verarbeitungsvorrichtung gesteuert werden können.

Das Informations- und Unterhaltungssystem kann ferner zur Durchführung des zuvor beschriebenen Verfahrens oder seiner Ausführungsformen geeignet sein, und umfasst daher auch die zuvor beschriebenen Vorteile.

Gemäß der vorliegenden Erfindung wird ferner ein Fahrzeug mit dem zuvor beschriebenen Informations- und Unterhaltungssystem bereitgestellt.

Obwohl die zuvor beschriebenen Ausführungsformen unabhängig voneinander beschrieben wurden, können die Ausführungsformen beliebig miteinander kombiniert werden.

Die vorliegende Erfindung wird nachfolgend unter Bezugnahme auf die Zeichnungen im Detail beschrieben werden.
Figur 1 zeigt schematisch ein Fahrzeug gemäß einer Ausführungsform der vorliegenden Erfindung.
Figur 2 zeigt schematisch die Struktur eines Informations- und Unterhaltungssystems gemäß einer Ausführungsform der vorliegenden Erfindung.
Figur 3 zeigt eine Struktur einer Funktion, welche von einem Informations- und Unterhaltungssystem gemäß einer Ausführungsform der vorliegenden Erfindung ausgeführt werden kann.
Figur 4 zeigt Verfahrensschritte eines Verfahrens gemäß einer Ausführungsform der vorliegenden Erfindung.
Figur 5 zeigt eine Einstellung einer Rangfolge gemäß einem Verfahren gemäß einer Ausführungsform der vorliegenden Erfindung.
Figur 6 zeigt weitere Verfahrensschritte eines Verfahrens gemäß einer Ausführungsform der vorliegenden Erfindung.

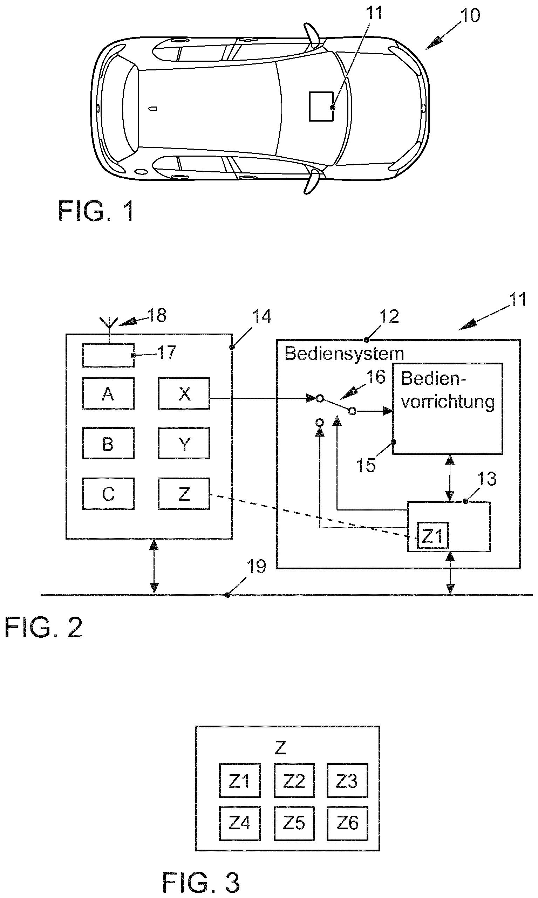

Figur 1 zeigt ein Fahrzeug 10 mit einem Informations- und Unterhaltungssystem 11, welches beispielsweise im Bereich einer Mittelkonsole oder im Bereich eines Armaturenbretts des Fahrzeugs 10 in dem Fahrzeug 10 eingebaut ist. Das Informations- und Unterhaltungssystem 11 kann beispielsweise einen großflächigen berührungssensitiven Bildschirm umfassen, auf welchem auszugebende Informationen des Informations- und Unterhaltungssystems 11 textuell und grafisch dargestellt werden können und ferner Bedienelemente dargestellt werden können, welche durch Berühren der Bildschirmoberfläche von einem Benutzer betätigt werden können.

Figur 2 zeigt das Informations- und Unterhaltungssystem 11 im Detail. Das Informations- und Unterhaltungssystem 11 umfasst ein Bediensystem 12, welches eine erste Verarbeitungsvorrichtung 13, eine Bedienvorrichtung 15, beispielsweise einen berührungssensitiven Bildschirm, und eine Umschaltvorrichtung 16 umfasst, und eine zweite Verarbeitungsvorrichtung 14. Mit Hilfe der Umschaltvorrichtung 16 können wahlweise Videoinformationen von der ersten Verarbeitungsvorrichtung 13 oder von der zweiten Verarbeitungsvorrichtung 14 zu der Bedienvorrichtung 15 geleitet werden, worauf diese Informationen dargestellt werden. Die Umschaltvorrichtung 16 kann beispielsweise von der ersten Verarbeitungsvorrichtung 13 angesteuert werden. Die erste Verarbeitungsvorrichtung 13 kann ferner mit der Bedienvorrichtung 15 gekoppelt sein, um Bedieninformationen von dem Benutzer zu erfassen. Die erste Verarbeitungsvorrichtung 13 ist beispielsweise eine Mikroprozessorsteuerung oder eine Steuerhardware, ein sogenannter FPGA. Die zweite Verarbeitungsvorrichtung 14 ist beispielsweise ein Computersystem mit einem Prozessor, einem Hauptspeicher und einem Massenspeicher. Sowohl die erste Verarbeitungsvorrichtung 13 als auch die zweite Verarbeitungsvorrichtung 14 sind mit einem Steuerbussystem 19 des Fahrzeugs, beispielsweise einem Ethernetsystem oder einem CAN-Bus, gekoppelt. Die zweite Verarbeitungsvorrichtung 14 umfasst eine Zugangsvorrichtung 17, welche über eine Antenne 18 einen Zugang zu einem mobilen Funkkommunikationsnetz bereitstellen kann, um beispielsweise Sprachdaten oder Mediendaten oder sonstige Informationen per Funk zu übertragen.

Das Informations- und Unterhaltungssystem 11 ist in der Lage, eine Vielzahl von Funktionen auszuführen, welche in Figur 2 als Funktionen A, B, C, X, Y und Z gekennzeichnet sind. Wie in Figur 3 am Beispiel der Funktion Z gezeigt ist, kann eine Funktion aus mehreren Teilfunktionen Z1, Z2, Z3, Z4, Z5 und Z6 bestehen. In Figur 3 umfasst die Funktion Z beispielhaft sechs Teilfunktionen Z1 - Z6, es ist jedoch klar, dass jede der Funktionen A - Z aus einer beliebigen Anzahl von Teilfunktionen bestehen kann. Dies kann auch bedeuten, dass eine der Funktionen A - Z nicht weiter unterteilbar ist und somit nur eine Teilfunktion umfasst, welche die gesamte Funktion umfasst. Einige Funktionen oder Teilfunktionen können sowohl von der zweiten Verarbeitungsvorrichtung 14 als auch von der ersten Verarbeitungsvorrichtung 13 ausgeführt werden. In dem Beispiel der Figur 2 kann die Teilfunktion Z1 von der ersten Verarbeitungsvorrichtung 13 ausgeführt werden. Wenn die Funktion Z beispielsweise eine Navigationsfunktion des Informations- und Unterhaltungssystems 11 ist, können sich die Teilfunktionen Z1 - Z6 beispielsweise auf eine Funktion zum Eingeben eines Navigationsziels, eine Funktion zum Berechnen einer Route von der aktuellen Position zu dem Navigationsziel und eine Funktion zum Ausgeben von Fahrtrichtungshinweisen auf einer Karte beziehen. Weitere Teilfunktionen können beispielsweise eine Funktion zum Ermitteln von aktuellen Verkehrsbehinderungen auf der Route oder eine Funktion zum Abrufen von interessanten Orten entlang der berechneten Route aus dem Internet betreffen. Da die erste Verarbeitungsvorrichtung 13 eine geringere Leistungsfähigkeit und weniger Speicher aufweist als die zweite Verarbeitungsvorrichtung 14, können rechenintensive oder speicherintensive Funktionen oder Teilfunktionen, wie z.B. die Routenberechnung oder das Darstellen der Route auf einer Karte, nur in der zweiten Verarbeitungsvorrichtung 14 durchgeführt werden. Ebenso können beispielsweise Funktionen, welche eine Datenkommunikation zu Verkehrsdiensten oder dem Internet benötigen, nur auf der zweiten Verarbeitungsvorrichtung 14 durchgeführt werden. Durch die einfachere Struktur der ersten Verarbeitungsvorrichtung 13 kann die erste Verarbeitungsvorrichtung 13 jedoch schneller gestartet werden und einfache Teilfunktionen können somit früher ausgeführt werden als auf der zweiten Verarbeitungsvorrichtung 14, beispielsweise die Teilfunktion zum Eingeben des Navigationsziels.

Der Bauraum in einem Fahrzeug, insbesondere im Bereich der Mittelkonsole oder des Armaturenbretts, ist beschränkt. Funktionen von Informations- und Unterhaltungssystemen, wie z.B. Navigationsfunktionen, Multimediawiedergaben oder Internetanwendungen, erfordern jedoch große Bildschirme in diesen Bereichen. Dadurch steht weniger Platz für Bedienelemente zur Verfügung. Um dieses Problem zu lösen, können Bedienelemente virtuell mit Hilfe eines berührungssensitiven Bildschirms der Bedienvorrichtung 15 ausgebildet werden. Beispielsweise können Bedienelemente einer Klimaanlage oder einer Sitzverstellung in einem entsprechenden Menü des Informations- und Unterhaltungssystems 11 dargestellt und bedient werden. Aus Kundensicht ist es jedoch wünschenswert, dass derartige Funktionen sofort nach dem Einsteigen zur Verfügung stehen. Aus technischer Sicht benötigt das Informations- und Unterhaltungssystem 11 jedoch eine erhebliche Zeitspanne, bis das System vollständig hochgefahren ist und sämtliche Funktionen geladen und gestartet sind. Dies kann dazu führen, dass der Benutzer unnötig lange auf die Bedienung von beispielsweise den zuvor beschriebenen grundlegenden Funktionen für eine Klima- und Sitzverstellung warten muss. Übliche Informations- und Unterhaltungssysteme bieten die Möglichkeit, bereits geladene und gestartete Funktionen zu bedienen, während andere Funktionen im Hintergrund geladen und gestartet werden. Bei der Vielzahl von möglichen Funktionen, welche von einem Informations- und Unterhaltungssystem ausgeführt werden können, ist es jedoch schwierig, eine allgemein gültige, für alle Benutzer zufriedenstellende Abfolge beim Starten der Funktionen vorzusehen, da unterschiedliche Benutzer unterschiedliche Verhaltensweisen haben. Um dies zu berücksichtigen, ist bei dem Informations- und Unterhaltungssystem 11 vorgesehen, dass ein Benutzer eine gewünschte Rangfolge für die zeitliche Verfügbarkeit der Funktionen einstellen kann. Anders ausgedrückt, kann der Benutzer ausgehend von einer voreingestellten Reihenfolge beim Auslieferungszustand des Fahrzeugs auswählbare Funktionen höher priorisieren, sodass diese nach einem Start des Informations- und Unterhaltungssystems früher verfügbar sind.

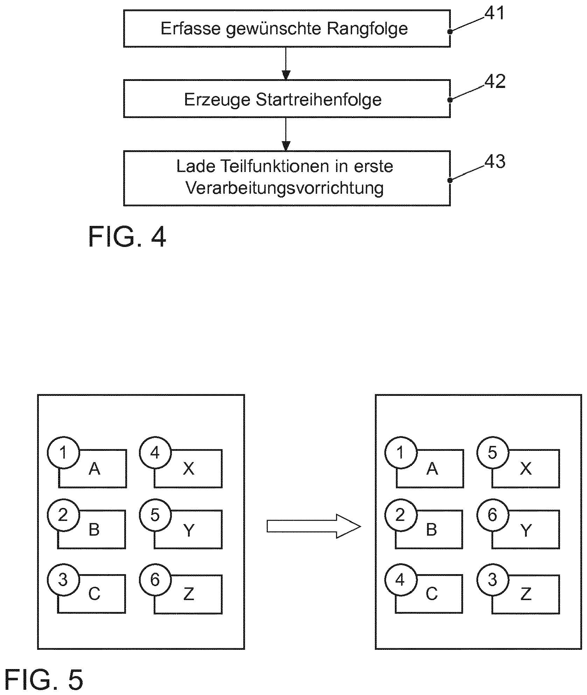

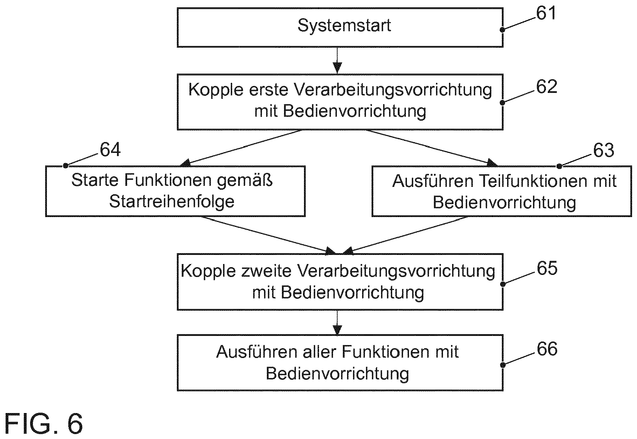

Figur 4 zeigt entsprechende Verfahrensschritte, welche von dem Informations- und Unterhaltungssystem 11 zu diesem Zweck ausgeführt werden. Im Schritt 41 wird die gewünschte Rangfolge beispielsweise mit Hilfe einer grafischen Benutzeroberfläche auf dem Bediensystem 12 im laufenden Betrieb des Informations- und Unterhaltungssystems 11 erfasst. Auf der Grundlage der gewünschten Rangfolge wird im Schritt 42 eine Startreihenfolge festgelegt, welche in dem Informations- und Unterhaltungssystem 11 gespeichert wird. Diese Startreihenfolge wird, wie es später in Verbindung mit Figur 6 beschrieben werden wird, beim nächsten Start des Informations- und Unterhaltungssystems 11 verwendet. Zusätzlich werden im Schritt 43 vorgegebene Teilfunktionen, welche den höher priorisierten Funktionen zugeordnet sind, in die erste Verarbeitungsvorrichtung 13 geladen, sodass diese Teilfunktionen bei einem nächsten Start des Informations- und Unterhaltungssystems 11 innerhalb kürzester Zeit für den Benutzer zur Verfügung stehen. Der Benutzer bekommt somit in kürzester Zeit die von ihm priorisierte Funktion (oder die von ihm priorisierten Funktionen) angezeigt und kann erste Eingaben tätigen. Hierbei kann eine Auswahl aus einem vorher festgelegten Umfang möglich sein. Die sofortige oder schnelle Verfügbarkeit kann als "Hot Button" Funktion bezeichnet werden.

Figur 5 veranschaulicht die Änderung der Startreihenfolge an einem Beispiel. Die Funktionen A, B, C, X, Y und Z werden im Auslieferungszustand des Informations- und Unterhaltungssystems 11 in der Reihenfolge gestartet, wie es durch die eingekreisten Nummern in Figur 5 auf der linken Seite gezeigt ist. Somit wird zuerst die Funktion A gestartet, gefolgt von der Funktion B, gefolgt von der Funktion C, gefolgt von der Funktion X, gefolgt von der Funktion Y, und schließlich wird die Funktion Z gestartet. Die Funktion Z betrifft beispielsweise die Navigationsfunktion. Der Benutzer hat in der Rangfolge der Navigationsfunktion eine hohe Priorität eingeräumt, d.h., er wünscht, dass diese Funktion so früh wie möglich verfügbar ist. Aufgrund von Abhängigkeiten zwischen den Funktionen kann es jedoch erforderlich sein, dass andere Funktionen vor der Navigationsfunktion zu starten sind, beispielsweise eine Datenbankfunktion A, welche der Navigationsfunktion einen Zugriff auf Kartenmaterial ermöglicht. In der Startreihenfolge wird die Navigationsfunktion Z daher möglichst weit vorne platziert, beispielsweise wird die Navigationsfunktion Z als dritte Funktion gestartet, wie es in Figur 5 rechts gezeigt ist. Um dem Benutzer jedoch zu ermöglichen, möglichst früh bereits Teile der Navigationsfunktion Z zu verwenden, wird zusätzlich die Teilfunktion Z1 in die erste Verarbeitungsvorrichtung 13 geladen. Die Teilfunktion Z1 betrifft die Navigationszieleingabe. Standardmäßig können in der ersten Verarbeitungsvorrichtung 13 weitere Funktionen geladen sein, beispielsweise Grundfunktionen zur Sitzverstellung oder zur Klimaeinstellung. Erweiterte Funktionen zur Sitzverstellung oder Klimaeinstellung können zusätzlich in der zweiten Verarbeitungsvorrichtung 14 vorhanden sein, welche nach einem Start des Informations- und Unterhaltungssystems später verfügbar sind, sobald die zweite Verarbeitungsvorrichtung 14 vollständig hochgefahren ist. Grundfunktionen der Sitzeinstellung, welche in der ersten Verarbeitungsvorrichtung 13 ausgeführt werden, können beispielsweise das Verschieben des Sitzes nach vorne und hinten, sowie die Höheneinstellung und Rückenlehneneinstellung umfassen. Zusätzliche Funktionen der Sitzeinstellung, beispielsweise Massageprogramme, sind über entsprechende Funktionen der zweiten Verarbeitungsvorrichtung 14 verfügbar, sobald die zweite Verarbeitungsvorrichtung 14 vollständig hochgefahren ist.

Figur 6 zeigt das Starten des Informations- und Unterhaltungssystems 11, nachdem es wie zuvor beschrieben gemäß den Benutzerwünschen konfiguriert wurde. Im Schritt 61 beginnt der Systemstart, d.h., das Informations- und Unterhaltungssystem 11 wird mit Strom versorgt. Die erste Verarbeitungsvorrichtung 13 kann aufgrund ihrer Struktur in sehr kurzer Zeit hochfahren und steuert die Umschaltvorrichtung 16 im Schritt 62 derart an, dass Ausgaben der ersten Verarbeitungsvorrichtung 13 über die Umschaltvorrichtung 16 auf der Bedienvorrichtung 15, beispielsweise einem berührungssensitiven Bildschirm, dargestellt werden. Im Schritt 63 werden die Funktionen und Teilfunktionen, beispielsweise die Teilfunktion Z1, welche auf die erste Verarbeitungsvorrichtung 13 geladen wurden, ausgeführt und können mit dem berührungssensitiven Bildschirm bedient werden. Beispielsweise kann ein Sitz eingestellt werden oder ein Navigationsziel eingegeben werden. Zeitlich parallel dazu fährt im Schritt 64 die zweite Verarbeitungsvorrichtung 14 hoch und startet die Funktionen gemäß der Startreihenfolge, wie sie im Schritt 42 der Figur 4 erzeugt wurde. Sobald die zweite Verarbeitungsvorrichtung 14 mit dem Hochfahren und Starten der Funktionen fertig ist, wird dies an die erste Verarbeitungsvorrichtung 13 gemeldet, welche daraufhin im Schritt 65 die Umschaltvorrichtung 16 umschaltet, sodass die zweite Verarbeitungsvorrichtung 14 mit dem berührungssensitiven Bildschirm gekoppelt ist. Nun können im Schritt 66 alle Funktionen, welche von der zweiten Verarbeitungsvorrichtung 14 bereitgestellt werden, ausgeführt werden.

Das zuvor beschriebene Informations- und Unterhaltungssystem 11 stellt eine schnelle Verfügbarkeit von zumindest einigen Grundfunktionen bereit. Der Benutzer steigt nach dem Öffnen des Fahrzeugs ein und erhält sofort eine Anzeige und kann erste Funktionen bedienen. Dies wird durch die erste Verarbeitungsvorrichtung 13 mit der extrem kurzen Startzeit ermöglicht. Zusätzlich wird dem Benutzer in kürzester Zeit die von ihm zuvor priorisierte Funktion angezeigt und er kann erste Eingaben tätigen. Wie in Verbindung mit Figur 4 beschrieben wurde, ist hierbei eine Auswahl von Funktionen aus einem vorher festgelegten Umfang möglich. Dabei ist zu beachten, dass üblicherweise nicht alle Funktionen beliebig priorisiert werden können. Beispielsweise können bei dem Beispiel der Figur 5 nur die Funktionen X, Y und Z durch den Benutzer priorisiert werden, wohingegen die Funktionen A, B und C nicht für eine Priorisierung zur Verfügung stehen, weil sie beispielsweise spezielle Hardware erfordern oder Abhängigkeiten in der funktionalen Startreihenfolge aufweisen. Durch die Priorisierung wird zusätzlich eine vereinfachte Version oder eine Teilfunktion der priorisierten Funktionen, beispielsweise die Teilfunktion Z1 der priorisierten Funktion Z, in die erste Verarbeitungsvorrichtung 13 geladen. Diese Funktion steht dadurch sofort zur Verfügung. Gleichzeitig wird von dem Informations- und Unterhaltungssystem 11 der Start der priorisierten Funktion so weit wie möglich nach vorne gezogen, damit die volle Funktionalität dieser Funktion schnellstmöglich erreicht wird (siehe Figur 5). Sobald die Funktion im System voll zur Verfügung steht, wird die Bedienung der Funktion von der ersten Verarbeitungsvorrichtung 13 an die zweite Verarbeitungsvorrichtung 14 übergeben, beispielsweise über die Umschaltvorrichtung 16. Bei geeigneter Ausgestaltung der Bedienoberflächen kann dies von dem Benutzer unbemerkt durchgeführt werden.

### Bezugszeichenliste

- 10: Fahrzeug
- 11: Informations- und Unterhaltungssystem
- 12: Bediensystem
- 13: erste Verarbeitungsvorrichtung
- 14: zweite Verarbeitungsvorrichtung
- 15: Bedienvorrichtung
- 16: Umschaltvorrichtung
- 17: Zugangsvorrichtung
- 18: Antenne
- 19: Steuerbussystem
- 41 - 43: Schritt
- 61 - 66: Schritt

## Patentansprüche

1. Verfahren für ein Informations- und Unterhaltungssystem eines Fahrzeugs, wobei das Informations- und Unterhaltungssystem (11) mehrere Funktionen (A, B, C, X, Y, Z) bereitstellt, welche von einem Benutzer des Fahrzeugs (10) verwendbar sind, wobei das Verfahren umfasst:
- Einstellen einer Rangfolge der mehreren Funktionen (A, B, C, X, Y, Z) durch den Benutzer, wobei die Rangfolge eine von dem Benutzer gewünschte zeitliche Verfügbarkeit der Funktionen (A, B, C, X, Y, Z) nach einem Einschalten des Informations- und Unterhaltungssystems (11) angibt, und
- Ausführen der mehreren Funktionen (A, B, C, X, Y, Z) nach einem Starten des Informations- und Unterhaltungssystems (11) in Abhängigkeit von der eingestellten Rangfolge,
wobei das Informations- und Unterhaltungssystem (11) zumindest eine erste Verarbeitungsvorrichtung (13) und eine zweite Verarbeitungsvorrichtung (14) umfasst, wobei mindestens eine Funktion (Z) der mehreren Funktionen (A, B, C, X, Y, Z) mehrere Teilfunktionen (Z1 -Z6) umfasst, wobei das Ausführen der mindestens einen Funktion (Z) nach dem Einschalten des Informations- und Unterhaltungssystems (11) ein Ausführen mindestens einer Teilfunktion (Z1) der zugehörigen mehreren Teilfunktionen (Z1 - Z6) auf der ersten Verarbeitungsvorrichtung (13) und ein Ausführen aller zugehörigen Teilfunktionen (Z1- Z6) auf der zweiten Verarbeitungsvorrichtung (14) umfasst.

2. Verfahren nach Anspruch 1, **dadurch gekennzeichnet, dass** das Ausführen der mehreren Funktionen (A, B, C, X, Y, Z) nach dem Einschalten des Informations- und Unterhaltungssystems (11) ein Starten der mehreren Funktionen (A, B, C, X, Y, Z) in einer Startreihenfolge, welche in Abhängigkeit von der Rangfolge erzeugt wird, umfasst.

3. Verfahren nach Anspruch 1 oder 2, **dadurch gekennzeichnet, dass** mindestens eine Funktion (Z) der mehreren Funktionen (A, B, C, X, Y, Z) mehrere Teilfunktionen (Z1 - Z6) umfasst, welche getrennt voneinander gestartet werden können, wobei das Ausführen der mindestens einen Funktion (Z) nach dem Einschalten des Informations- und Unterhaltungssystems (11) ein Starten der zugehörigen mehreren Teilfunktionen (Z1- Z6) in einer vorgegebenen Teilfunktionsstartreihenfolge umfasst.

4. Verfahren nach einem der vorhergehenden Ansprüche, **dadurch gekennzeichnet, dass** das Informations- und Unterhaltungssystem (11) eine Bedienvorrichtung (15) umfasst, wobei die Bedienvorrichtung (15) wahlweise mit der ersten Verarbeitungsvorrichtung (13) oder der zweiten Verarbeitungsvorrichtung (14) zur Bedienung von mit der entsprechenden Verarbeitungsvorrichtung ausgeführten Funktionen koppelbar ist, wobei die Bedienvorrichtung (15) zunächst mit der ersten Verarbeitungsvorrichtung (13) gekoppelt wird, wodurch eine Bedienung der mindestens einen Teilfunktion (Z1) ermöglicht wird, welche von der ersten Verarbeitungsvorrichtung (13) ausgeführt wird, und erst, wenn weitere zugehörige Teilfunktionen auf der zweiten Verarbeitungsvorrichtung (14) ausgeführt werden, wird die Bedienvorrichtung (15) mit der zweiten Verarbeitungsvorrichtung (14) gekoppelt wird, wodurch eine Bedienung weiterer Teilfunktionen (Z1- Z6) ermöglicht wird.

5. Verfahren nach Anspruch 4, **dadurch gekennzeichnet, dass** die Bedienvorrichtung (15) einen berührungssensitiven Bildschirm umfasst.

6. Verfahren nach einem der vorhergehenden Ansprüche, **dadurch gekennzeichnet, dass** die erste Verarbeitungsvorrichtung (13) und die zweite Verarbeitungsvorrichtung (14) mit einem Steuerbussystem (19) des Fahrzeugs (10) gekoppelt sind, um Vorrichtungen außerhalb des Informations- und Unterhaltungssystems (11) mittels der mehreren Funktionen (A, B, C, X, Y, Z) des Informations- und Unterhaltungssystems (11) zu steuern.

7. Verfahren nach einem der vorhergehenden Ansprüche, **dadurch gekennzeichnet, dass** die zweite Verarbeitungsvorrichtung (14) aufweist:
- eine Zugangsvorrichtung (17) zu einem mobilen Funkkommunikationsnetz,
- eine Datenspeichervorrichtung, welche größer als eine Datenspeichervorrichtung der ersten Verarbeitungsvorrichtung (13) ist, und/oder
- eine Datenverarbeitungsleistung, welche höher als eine Datenverarbeitungsleistung der ersten Verarbeitungsvorrichtung (13) ist.

8. Informations- und Unterhaltungssystem für ein Fahrzeug, umfassend:
- eine Bedienvorrichtung (15) zur Bedienung von mehreren Funktionen (A, B, C, X, Y, Z) des Informations- und Unterhaltungssystems (11) durch einen Benutzer des Informations- und Unterhaltungssystems (11), und
- mindestens eine Verarbeitungsvorrichtung (13,14), welche mit der Bedienvorrichtung (15) gekoppelt ist und ausgestaltet ist, die mehreren Funktionen (A, B, C, X, Y, Z) auszuführen,
wobei die mindestens eine Verarbeitungsvorrichtung (13,14) ferner ausgestaltet ist, mittels einer Eingabe von dem Benutzer eine Rangfolge der mehreren Funktionen (A, B, C, X, Y, Z) einzustellen, wobei die Rangfolge eine von dem Benutzer gewünschte zeitliche Verfügbarkeit der Funktionen (A, B, C, X, Y, Z) nach einem Einschalten des Informations- und Unterhaltungssystems (11) angibt, und die mehreren Funktionen (A, B, C, X, Y, Z) nach einem Starten des Informations- und Unterhaltungssystems (11) in Abhängigkeit von der eingestellten Rangfolge auszuführen,
wobei die mindestens eine Verarbeitungsvorrichtung eine erste Verarbeitungsvorrichtung (13) und eine zweite Verarbeitungsvorrichtung (14) umfasst, wobei mindestens eine Funktion (Z) der mehreren Funktionen mehrere Teilfunktionen (Z1 - Z6) umfasst, wobei die erste Verarbeitungsvorrichtung (13) ausgestaltet ist, mindestens eine Teilfunktion (Z1) der mehreren Teilfunktionen (Z1- Z6) auszuführen, und die zweite Verarbeitungsvorrichtung (14) ausgestaltet ist, alle Teilfunktionen (Z1- Z6) auszuführen, wobei die Bedienvorrichtung (15) wahlweise mit der ersten Verarbeitungsvorrichtung (13) oder der zweiten Verarbeitungsvorrichtung (14) zur Bedienung von mit der entsprechenden Verarbeitungsvorrichtung ausgeführten Funktionen koppelbar ist, wobei die Bedienvorrichtung (15) zunächst mit der ersten Verarbeitungsvorrichtung (13) gekoppelt wird, wodurch eine Bedienung der mindestens einen Teilfunktion (Z1) ermöglicht wird, welche von der ersten Verarbeitungsvorrichtung (13) ausgeführt wird, und erst, wenn weitere zugehörige Teilfunktionen (Z1 - Z6) auf der zweiten Verarbeitungsvorrichtung (14) ausgeführt werden, die Bedienvorrichtung (15) mit der zweiten Verarbeitungsvorrichtung (14) gekoppelt wird, wodurch eine Bedienung weiterer Teilfunktionen (Z1 - Z6) ermöglicht wird,
wobei die erste Verarbeitungsvorrichtung (13) und die zweite Verarbeitungsvorrichtung (14) mit einem Steuerbussystem (19) des Fahrzeugs (10) gekoppelt sind, um Vorrichtungen außerhalb des Informations- und Unterhaltungssystems (11) mittels der mehreren Funktionen (A, B, C, X, Y, Z) des Informations- und Unterhaltungssystems (11) zu steuern.

9. Informations- und Unterhaltungssystem nach Anspruch 8, **dadurch gekennzeichnet, dass** das Informations- und Unterhaltungssystem (11) zur Durchführung des Verfahrens nach einem der Ansprüche 1-7 ausgestaltet ist.

10. Fahrzeug mit einem Informations- und Unterhaltungssystem (11) nach einem der Ansprüche 8 oder 9.

## Claims

1. A method for an information and entertainment system of a vehicle, wherein the information and entertainment system (11) provides a plurality of functions (A, B, C, X, Y, Z) that can be used by a user of the vehicle (10), wherein the method comprises:
- Setting a ranking of the plurality of functions (A, B, C, X, Y, Z) by the user, wherein the ranking indicates a time availability of the functions (A, B, C, X, Y, Z) desired by the user after the information and entertainment system (11) has been switched on, and
- Executing the plurality of functions (A, B, C, X, Y, Z) after starting the information and entertainment system (11) as a function of the ranking that has been set, wherein the information and entertainment system (11) comprises at least a first processing device (13) and a second processing device (14), wherein at least one function (Z) of the plurality of functions (A, B, C, X, Y, Z) comprises a plurality of sub-functions (Z1 -Z6), wherein executing the at least one function (Z) after switching on the information and entertainment system (11) comprises executing at least one sub-function (Z1) of the associated plurality of sub-functions (Z1-Z6) on the first processing device (13) and executing all of the associated sub-functions (Z1-Z6) on the second processing device (14).

2. The method according to claim 1, **characterized in that** executing the plurality of functions (A, B, C, X, Y, Z) after switching on the information and entertainment system (11) comprises starting the plurality of functions (A, B, C, X, Y, Z) in a starting sequence that is generated as a function of the ranking.

3. The method according to claim 1 or 2, **characterized in that** at least one function (Z) of the plurality of functions (A, B, C, X, Y, Z) comprises a plurality of sub-functions (Z1 - Z6) that can be started separately from each other, wherein executing the at least one function (Z) after switching on the information and entertainment system (11) comprises starting the associated plurality of sub-functions (Z1-Z6) in a predetermined sub-function starting sequence.

4. The method according to one of the preceding claims, **characterized in that** the information and entertainment system (11) comprises an operating device (15), wherein the operating device (15) can be selectively coupled to the first processing device (13) or to the second processing device (14) to operate functions executed with the corresponding processing device, wherein the operating device (15) is initially coupled to the first processing device (13), thereby enabling operation of the at least one sub-function (Z1) that is executed by the first processing device (13), and only if further associated sub-functions are executed on the second processing device (14) is the operating device (15) coupled to the second processing device (14), thereby enabling operation of further sub-functions (Z1-Z6).

5. The method according to claim 4, **characterized in that** the operating device (15) comprises a touch-sensitive screen.

6. The method according to one of the preceding claims, **characterized in that** the first processing device (13) and the second processing device (14) are coupled to a control bus system (19) of the vehicle (10) in order to control devices external to the information and entertainment system (11) by means of the plurality of functions (A, B, C, X, Y, Z) of the information and entertainment system (11).

7. The method according to one of the preceding claims, **characterized in that** the second processing device (14) has:
- An access device (17) to a mobile radio communications network,
- A data storage device that is larger than a data storage device of the first processing device (13), and/or
- A data processing power that is higher than the data processing power of the first processing device (13).

8. An information and entertainment system for a vehicle, comprising:
- An operating device (15) for operating a plurality of functions (A, B, C, X, Y, Z) of the information and entertainment system (11) by a user of the information and entertainment system (11), and
- At least one processing device (13, 14) that is coupled to the operating device (15) and is designed to execute the plurality of functions (A, B, C, X, Y, Z),
wherein the at least one processing device (13, 14) is further designed to set, by means of an input from the user, a ranking of the plurality of functions (A, B, C, X, Y, Z), wherein the ranking indicates a time availability of the functions (A, B, C, X, Y, Z) desired by the user after the information and entertainment system (11) has been switched on, and to execute the plurality of functions (A, B, C, X, Y, Z) after starting the information and entertainment system (11) as a function of the ranking that has been set,
wherein the at least one processing device comprises a first processing device (13) and a second processing device (14), wherein at least one function (Z) of the plurality of functions comprises a plurality of sub-functions (Z1 - Z6), wherein the first processing device (13) is designed to execute at least one sub-function (Z1) of the plurality of sub-functions (Z1-Z6), and the second processing device (14) is designed to execute all sub-functions (Z1 - Z6), wherein the operating device (15) can be selectively coupled to the first processing device (13) or to the second processing device (14) to operate functions executed with the corresponding processing device, wherein the operating device (15) is initially coupled to the first processing device (13), thereby enabling operation of the at least one sub-function (Z1) that is executed by the first processing device (13), and only if further associated sub-functions (Z1 - Z6) are executed on the second processing device (14) is the operating device (15) coupled to the second processing device (14), thereby enabling operation of further sub-functions (Z1- Z6),
wherein the first processing device (13) and the second processing device (14) are coupled to a control bus system (19) of the vehicle (10) in order to control devices external to the information and entertainment system (11) by means of the plurality of functions (A, B, C, X, Y, Z) of the information and entertainment system (11).

9. The information and entertainment system according to claim 8,
**characterized in that** the information and entertainment system (11) is designed to perform the method according to one of the claims 1-7.

10. A vehicle having an information and entertainment system (11) according to one of the claims 8 or 9.

## Revendications

1. Procédé pour un système d'information et de divertissement d'un véhicule, dans lequel le système d'information et de divertissement (11) dispose d'une pluralité de fonctions (A, B, C, X, Y, Z), qui peuvent être utilisées par un utilisateur du véhicule (10), le procédé comprenant :
- le réglage d'un classement hiérarchique de la pluralité de fonctions (A, B, C, X, Y, Z) par l'utilisateur, dans lequel le classement hiérarchique indique une disponibilité dans le temps, souhaitée par l'utilisateur, des fonctions (A, B, C, X, Y, Z) après une mise en route du système d'information et de divertissement (11) et
- l'exécution de la pluralité de fonctions (A, B, C, X, Y, Z) après un démarrage du système d'information et de divertissement (11) en fonction du classement hiérarchique défini, dans lequel le système d'information et de divertissement (11) comprend au moins un premier dispositif de traitement (13) et un deuxième dispositif de traitement (14), dans lequel au moins une fonction (Z) de la pluralité de fonctions (A, B, C, X, Y, Z) comprend une pluralité de fonctions partielles (Z1 -Z6), dans lequel l'exécution de l'au moins une fonction (Z) après la mise en route du système d'information et de divertissement (11) comprend une exécution d'au moins une fonction partielle (Z1) des fonctions partielles (Z1 - Z6) associées sur le premier dispositif de traitement (13) et une exécution de toutes les fonctions partielles (Z1-Z6) associées sur le deuxième dispositif de traitement (14).

2. Procédé selon la revendication 1, **caractérisé en ce que** l'exécution de la pluralité de fonctions (A, B, C, X, Y, Z) après la mise en route du système d'information et de divertissement (11) comprend un démarrage de la pluralité de fonctions (A, B, C, X, Y, Z) dans une séquence de démarrage, qui est générée en fonction du classement hiérarchique.

3. Procédé selon la revendication 1 ou 2, **caractérisé en ce qu'**au moins une fonction (Z) de la pluralité de fonctions (A, B, C, X, Y, Z) comprend une pluralité de fonctions partielles (Z1 - Z6), qui peuvent être démarrées séparément les unes des autres, dans lequel l'exécution de l'au moins une fonction (Z) après la mise en route du système d'information et de divertissement (11) comprend un démarrage de la pluralité de fonctions partielles (Z1- Z6) associées dans une séquence de démarrage de fonctions partielles.

4. Procédé selon l'une quelconque des revendications précédentes, **caractérisé en ce que** le système d'information et de divertissement (11) comprend un dispositif de commande (15), dans lequel le dispositif de commande (15) peut être couplé sélectivement avec le premier dispositif de traitement (13) ou le deuxième dispositif de traitement (14) pour la commande de fonctions exécutées avec le dispositif de traitement correspondant, dans lequel le dispositif de commande (15) est d'abord couplé avec le premier dispositif de traitement (13), moyennant quoi une commande de l'au moins une fonction partielle (Z1) est possible, qui est exécutée par le premier dispositif de traitement (13) et le dispositif de commande (15) est couplé avec le deuxième dispositif de traitement (14) seulement lorsque d'autres fonctions partielles associées sont exécutées sur le deuxième dispositif de traitement (14), moyennant quoi une commande d'autres fonctions partielles (Z1- Z6) est possible.

5. Procédé selon la revendication 4, **caractérisé en ce que** le dispositif de commande (15) comprend un écran tactile.

6. Procédé selon l'une quelconque des revendications précédentes, **caractérisé en ce que** le premier dispositif de traitement (13) et le deuxième dispositif de traitement (14) sont couplés avec un système de bus de contrôle (19) du véhicule (10), afin de contrôler des dispositifs autres que le système d'information et de divertissement (11) au moyen de la pluralité de fonctions (A, B, C, X, Y, Z) du système d'information et de divertissement (11).

7. Procédé selon l'une quelconque des revendications précédentes, **caractérisé en ce que** le deuxième dispositif de traitement (14) présente :
- un dispositif d'accès (17) à un réseau de radiocommunication mobile,
- un dispositif de stockage de données, qui est plus grand qu'un dispositif de stockage de données du premier dispositif de traitement (13) et/ou
- une puissance de traitement de données, qui est plus élevée qu'une puissance de traitement de données du premier dispositif de traitement (13).

8. Système d'information et de divertissement pour un véhicule, comprenant :
- un dispositif de commande (15) pour la commande d'une pluralité de fonctions (A, B, C, X, Y, Z) du système d'information et de divertissement (11) par un utilisateur du système d'information et de divertissement (11) et
- au moins un dispositif de traitement (13, 14), qui est couplé avec le dispositif de commande (15) et est conçu pour exécuter la pluralité de fonctions (A, B, C, X, Y, Z),
dans lequel l'au moins un dispositif de traitement (13, 14) est en outre conçu pour régler, au moyen d'une saisie de l'utilisateur, un classement hiérarchique de la pluralité de fonctions (A, B, C, X, Y, Z), dans lequel le classement hiérarchique indique une disponibilité dans le temps, souhaitée par l'utilisateur, des fonctions (A, B, C, X, Y, Z) après une mise en route du système d'information et de divertissement (11) et pour exécuter la pluralité de fonctions (A, B, C, X, Y, Z) après un démarrage du système d'information et de divertissement (11) en fonction du classement hiérarchique défini,
dans lequel l'au moins un dispositif de traitement comprend un premier dispositif de traitement (13) et un deuxième dispositif de traitement (14), dans lequel au moins une fonction (Z) de la pluralité de fonctions comprend une pluralité de fonctions partielles (Z1 - Z6), dans lequel le premier dispositif de traitement (13) est conçu pour exécuter au moins une fonction partielle (Z1) de la pluralité de fonctions partielles (Z1- Z6) et le deuxième dispositif de traitement (14) est conçu pour exécuter toutes les fonctions partielles (Z1- Z6), dans lequel le dispositif de commande (15) peut être couplé sélectivement avec le premier dispositif de traitement (13) ou le deuxième dispositif de traitement (14) pour la commande des fonctions exécutées avec le dispositif de traitement correspondant, dans lequel le dispositif de commande (15) est d'abord couplé avec le premier dispositif de traitement (13), moyennant quoi une commande de l'au moins une fonction partielle (Z1) est possible, qui est exécutée par le premier dispositif de traitement (13) et le dispositif de commande (15) est couplé avec le deuxième dispositif de traitement (14) seulement lorsque d'autres fonctions partielles (Z1 - Z6) associées sont exécutées sur le deuxième dispositif de traitement (14), moyennant quoi une commande d'autres fonctions partielles (Z1 - Z6) est possible,
dans lequel le premier dispositif de traitement (13) et le deuxième dispositif de traitement (14) sont couplés avec un système de bus de contrôle (19) du véhicule (10), afin de contrôler des dispositifs autres que le système d'information et de divertissement (11) au moyen de la pluralité de fonctions (A, B, C, X, Y, Z) du système d'information et de divertissement (11).

9. Système d'information et de divertissement selon la revendication 8, **caractérisé en ce que** le système d'information et de divertissement (11) est conçu pour l'exécution du procédé selon l'une quelconque des revendications 1 à 7.

10. Véhicule comprenant un système d'information et de divertissement (11) selon l'une quelconque des revendications 8 ou 9.
